# EUROPEAN PATENT APPLICATION

(11) **EP 4 822 815 A1**
(43) Date of publication of application: **14.10.2026**
(21) Application number: 26156019.7
(22) Date of filing: 03.02.2026
(51) Int. Cl.: H01M 10/48, H01M 10/42, H01M 10/0525

(54) **PRESSURE MEASUREMENT APPARATUS AND SECONDARY BATTERY DESIGN SYSTEM**

(30) Priority: 09.04.2025 KR 20250046191
(71) Applicant: SAMSUNG SDI CO., LTD., Yongin-si, Gyeonggi-do 17084 (KR)
(72) Inventor: PARK, Min Hong, 16678 Suwon-si (KR); KIM, Min Hyuk, 16678 Suwon-si (KR); LEE, Seung Hyun, 16678 Suwon-si (KR); KWAK, Ye Chan, 16678 Suwon-si (KR); HEO, Young Jin, 16678 Suwon-si (KR); KWON, Soo Bin, 16678 Suwon-si (KR)
(74) Representative: Marks & Clerk LLP

(57) **Abstract**

The present disclosure relates to a rupture pressure measurement apparatus and is directed to providing a rupture pressure measurement apparatus capable of measuring a rupture pressure of a secondary battery in an environment similar to an actual ignition situation. To this end, the present disclosure provides a rupture pressure measurement apparatus including a chamber provided with a secondary battery therein, a heating unit that heats the secondary battery, a pressing unit that presses the secondary battery until the secondary battery is ruptured, and a main sensor that measures a rupture pressure of the secondary battery when the secondary battery is ruptured.

## Description

### FIELD

The present disclosure relates to a rupture pressure measurement apparatus and a secondary battery design system including the rupture pressure measurement apparatus.

### BACKGROUND

Generally, with the recent rapid proliferation of electronic devices using batteries such as mobile phones, laptop computers, and electric vehicles, the demand for secondary batteries with high energy density and high capacity has been rapidly increasing. Accordingly, research and development for improving the performance of lithium secondary batteries is actively being conducted.

A lithium secondary battery is a battery including a positive electrode and a negative electrode including an active material capable of lithium ion intercalation and deintercalation, and an electrolyte, and produces electric energy through oxidation and reduction reactions when lithium ions are intercalated and deintercalated from the positive electrode and the negative electrode.

The herein information disclosed in this Background section is provided for enhancement of understanding of the background of the present disclosure, and therefore, the information may contain information that does not constitute the related art.

### SUMMARY

The present disclosure is directed to providing a rupture pressure measurement apparatus capable of measuring a rupture pressure of a secondary battery in a high temperature and high pressure environment.

For example, the present disclosure is directed to providing a rupture pressure measurement apparatus capable of measuring a rupture pressure of a case of a secondary battery in a high temperature and high pressure environment.

For example, the present disclosure is directed to providing a rupture pressure measurement apparatus capable of measuring a rupture pressure of a cap plate or cap assembly of a secondary battery in a high temperature and high pressure environment.

The present disclosure is directed to providing a secondary battery design system that designs a case of a secondary battery in consideration of a rupture pressure of the case of the secondary battery.

However, the technical problems that the present disclosure are intended to solve are not limited to the herein-described problems, and other problems that are not mentioned can be clearly understood by those skilled in the art from the description of the disclosure to be described herein.

A rupture pressure measurement apparatus according to the present disclosure for solving the technical problem may include a chamber providing a space in which a secondary battery can be provided, a heating unit configured to heat the secondary battery, a pressing unit configured to press the secondary battery until the secondary battery is ruptured, and a main sensor configured to measure a rupture pressure of the secondary battery when the secondary battery is ruptured.

For example, the heating unit may include a heater configured to come into contact with an outer surface of the secondary battery to heat the secondary battery.

Further, the heating unit may further include a power supply unit configured to supply power to the heater and control the heater so that the heater heats the secondary battery isothermally.

For example, the power supply unit may cause the heating unit to heat a case at a rate of 0.1 °C/min or more and 3 °C/min or less.

Further, the rupture pressure measurement apparatus may further include a temperature sensor configured to measure a temperature of the secondary battery, wherein the power supply unit may determine whether the secondary battery is isothermally heated based on the measured temperature, and reduce a heating rate of the heater when it is determined that the secondary battery is not isothermally heated.

Further, the power supply unit may stop the supply of power to the heater when the measured temperature is a predetermined temperature or higher.

For example, the pressing unit further includes a gas injection unit configured to inject gas into the secondary battery to press the secondary battery.

For example, the pressing unit may further include a processor configured to simulate an amount of gas generated in the secondary battery in a preset environment and set an amount of gas injected into the secondary battery based on the simulation.

For example, the pressing unit may further include a memory configured to store data regarding an amount of gas, and a processor configured to set an amount of gas injected into the secondary battery based on the data.

For example, the pressing unit may further include a sealing portion configured to seal the secondary battery and provide a passage through which the gas injection unit passes.

For example, the gas injection unit may pass through the secondary battery and be fixed to the secondary battery, and the pressing unit may further include a fixing tape configured to seal a space between the gas injection unit and the secondary battery.

For example, the rupture pressure measurement apparatus may further include a sub-sensor configured to detect a ruptured area in the secondary battery when the secondary battery is ruptured.

A secondary battery design system according to the present disclosure for solving the technical problem is a secondary battery design system including a rupture pressure measurement apparatus and a design unit, wherein the rupture pressure measurement apparatus may include a chamber providing a space in which a secondary battery can be provided, a pressing unit configured to press the secondary battery until the secondary battery is ruptured, and a main sensor configured to measure a rupture pressure of the secondary battery when the secondary battery is ruptured, and the design unit may design the case based on the measured rupture pressure.

For example, the rupture pressure measurement apparatus may further include a sub-sensor configured to detect a ruptured area in the secondary battery when the secondary battery is ruptured.

For example, the design unit may change a design for at least one of a thickness and material of a portion corresponding to the ruptured area in the secondary battery.

For example, the heating unit may include a heater configured to come into contact with an outer surface of the secondary battery to heat the secondary battery, and a power supply unit configured to supply power to the heater and control the heater so that the heater heats the secondary battery isothermally.

For example, the power supply unit may cause the heating unit to heat the secondary battery at a rate of 0.1 °C/min or more and 3 °C/min or less.

For example, the rupture pressure measurement apparatus may further include a temperature sensor configured to measure a temperature of the secondary battery, and the power supply unit may determine whether the secondary battery is isothermally heated based on the measured temperature, and reduce a heating rate of the heater when it is determined that the secondary battery is not isothermally heated.

For example, the pressing unit may further include a gas injection unit configured to inject gas into the secondary battery to press the secondary battery.

For example, the pressing unit may further include a processor configured to simulate an amount of gas generated in the secondary battery in a preset environment and set an amount of gas injected into the secondary battery based on the simulation.

At least some of the above and other features of the invention are set out in the claims.

### BRIEF DESCRIPTION OF THE DRAWINGS

The drawings attached to the present specification illustrate some embodiments of the present disclosure and further describe aspects and features of the present disclosure together with the detailed description of the present disclosure. However, the present disclosure should not be construed as being limited to the drawings:
FIGS. 1 to 4 are cross-sectional views schematically illustrating a secondary battery according to embodiments of the present disclosure;
FIG. 5 is a diagram schematically illustrating a rupture pressure measurement apparatus according to embodiments of the present disclosure;
FIG. 6 is a block diagram schematically illustrating components of a heating unit according to embodiments of the present disclosure;
FIG. 7 is a flowchart showing driving of the heating unit according to embodiments of the present disclosure;
FIG. 8 is a flowchart showing driving of the heating unit according to embodiments of the present disclosure;
FIG. 9 is a block diagram schematically illustrating components of a pressing unit according to embodiments of the present disclosure;
FIG. 10 is a diagram schematically illustrating an example in which the pressing unit presses a case of a secondary battery according to embodiments of the present disclosure; and
FIG. 11 is a block diagram schematically illustrating components of a secondary battery design system according to embodiments of the present disclosure.

### DETAILED DESCRIPTION

Hereinafter, example embodiments of the present disclosure will be described in detail with reference to the accompanying drawings. Prior to this, terms or words used in the present specification and claims should not be construed as being limited to their usual or dictionary meanings and should be construed as having meanings and concepts that conform to the technical idea of the present disclosure based on the principle that the inventor can appropriately define the concept of the terms in order to explain his or her own disclosure in the best way. Therefore, embodiments described in the present specification and the configurations illustrated in the drawings are only some example embodiments of the present disclosure and do not represent all of the technical idea of the present disclosure, and thus it should be understood that there may be various other equivalents and variations at the time of filing this application.

Further, "comprise," "include," "comprising," and/or "including" used in the present specification specify the presence of mentioned features, numbers, steps, operations, members, elements, and/or groups thereof, and do not exclude the presence or addition of one or more other features, numbers, operations, members, elements, and/or groups thereof.

Further, in order to facilitate understanding of the disclosure, the accompanying drawings may not be drawn to scale, but rather, the dimensions of some components may be exaggerated. Also, in different embodiments, the same components may be denoted by the same reference numerals.

The mention of two comparison targets being "the same" means "being substantially the same." Accordingly, substantial sameness may include a case where there is a deviation considered to be low in the art, such as a deviation within 5%. Further, uniformity of a parameter in a predetermined area may mean uniformity in an average sense.

Although the terms first, second, and the like are used to describe various components, it is obvious that the components are not limited by these terms. These terms are used only to distinguish one component from another, and it is obvious that a first component may also be a second component unless otherwise stated.

Throughout the specification, each component may be singular or plural unless otherwise stated.

The fact that a first component is disposed "on (or beneath)" or "above (or below)" a second component means not only that the first component is disposed in contact with an upper surface (or lower surface) of the second component, but also that a third component may be interposed between the first component and the second component disposed above (or below) the first component.

Further, when a component is described as being "on," "connected to," or "coupled to" another component, it should be understood that the components may be directly connected or coupled to each other, but that still another component may be "interposed" between the components, or each component may be "connected" or "coupled" through still another component.

As used herein, the term "and/or" includes any and all combinations of one or more of the listed associated items. Further, the use of "may" at the time of describing embodiments of the present disclosure relates to "one or more embodiments of the present disclosure." "One or more" and expressions such as "one or more" before a list of elements are construed to modify a list of elements as a whole and do not modify individual elements of the list.

When reference is made to "A and/or B" throughout the specification, this means A, B, or A and B unless otherwise stated, and when reference is made to "C to D," this means C or more and D or less, unless otherwise stated.

When phrases such as "at least one of A, B, and C," "at least one of A, B, or C," "at least one selected from a group of A, B, and C," or "at least one selected from among A, B, and C" are used to designate a list of elements A, B, and C, the phrases can refer to any and all suitable combinations.

The term "use" may be considered to be synonymous with the term "utilize." As used herein, the terms "substantially," "about," and similar terms are used as terms of approximation, not degree, and are intended to consider inherent variations in measured or calculated values that would be recognized by those skilled in the art.

Although the terms "first," "second," "third," etc., may be used herein to describe various elements, components, areas, layers, and/or sections, these elements, components, areas, layers, and/or sections should not be limited by these terms. These terms are used to distinguish one element, component, area, drawing layer, or section from another element, component, area, drawing layer, or section. Thus, a first element, component, area, layer, or section discussed herein could also be referred to as a second element, component, area, layer, or section without departing from the teachings of the example embodiments.

For ease of description, spatially relative terms such as "beneath," "below," "lower," "on," and "over" may be used herein to describe a relationship of one element or feature to another element(s) or feature(s) as illustrated in the drawings. It will be understood that spatially relative positions encompass different orientations of the device in use or operation in addition to orientation depicted in figures. For example, when a device in the drawings is flipped over, an element described as being "below" or "beneath" another element would be understood as being "above" or "on" the other element. Thus, the term "below" may encompass both above and below.

The terms used herein are intended to describe embodiments of the present disclosure and are not intended to limit the present disclosure.

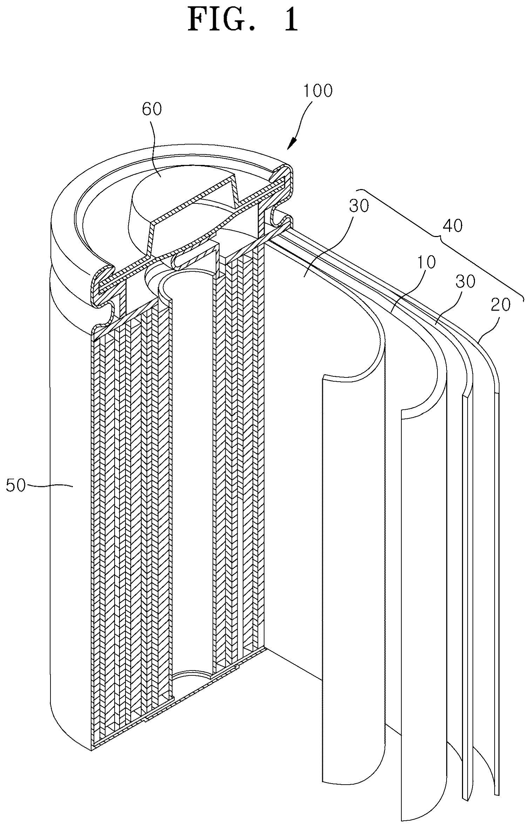

FIGS. 1 to 4 are cross-sectional views schematically illustrating a secondary battery according to embodiments of the present disclosure.

A secondary battery 100 according to embodiments of the present disclosure includes an electrode assembly 40 and a case 50 in which the electrode assembly 40 is accommodated.

The electrode assembly 40 according to embodiments of the present disclosure may function as a unit structure that performs a power charging and/or discharging operation in the secondary battery 100.

The electrode assembly 40 may include a first electrode 10, a second electrode 20, and a separator 30 located between the first electrode 10 and the second electrode 20 and enabling the movement of lithium ions while preventing a short circuit between the first electrode 10 and the second electrode 20. For example, the first electrode 10 is a positive electrode or a negative electrode. Also, for example, the second electrode 20 is a negative electrode or a positive electrode and has a polarity opposite to that of the first electrode 10.

### Positive Electrode Active Material

The positive electrode active material may be a compound capable of reversible lithium intercalation and deintercalation (a lithiated intercalation compound). Specifically, the positive electrode active material may be at least one of composite oxides of lithium and a metal selected from cobalt, manganese, nickel, and a combination thereof.

The composite oxide may be a lithium transition metal composite oxide, and specific examples thereof include a lithium nickel-based oxide, a lithium cobalt-based oxide, a lithium manganese-based oxide, a lithium iron phosphate-based compound, a cobalt-free nickel-manganese-based oxide, and a combination thereof.

As an example, a compound represented by any one of the following chemical formulas may be used. LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the chemical formula, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

For example, the positive electrode active material may be a high-nickel positive electrode active material in which content of nickel is 80 mol% or more, 85 mol% or more, 90 mol% or more, 91 mol% or more, or 94 mol% or more and 99 mol% or less with respect to 100 mol% of a metal other than lithium in the lithium transition metal composite oxide. Since the high-nickel positive electrode active material can implement a high capacity, the high-nickel positive electrode active material may be applied to a high-capacity, high-density secondary battery.

### Positive Electrode

The positive electrode of the secondary battery 100 may include a substrate and a positive electrode composite layer formed on the substrate. The positive electrode composite layer may include a positive electrode active material and may further include a binder and/or a conductive material.

For example, the positive electrode may further include an additive that can function as a sacrificial positive electrode.

The content of the positive electrode active material may range from 90 wt% to 99.5 wt% with respect to 100 wt% of the positive electrode composite layer, and the content of the binder and the conductive material may range from 0.5 wt% to 5 wt% with respect to 100 wt% of the positive electrode composite layer.

The binder serves to firmly bind positive electrode active material particles to each other and also to firmly bind the positive electrode active material to the substrate. Representative examples of the binder include, but are not limited to, polyvinyl alcohol, carboxymethyl cellulose, hydroxypropyl cellulose, diacetyl cellulose, polyvinyl chloride, carboxylated polyvinyl chloride, polyvinyl fluoride, polymer containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

The conductive material is used to impart conductivity to the electrode and may be any material that does not cause a chemical change and is electronically conductive in the battery to be formed. Examples of the conductive material may include carbon-based materials such as natural graphite, artificial graphite, carbon black, acetylene black, Ketjen black, carbon fiber, carbon nanofibers, and carbon nanotubes; metal-based materials in the form of a metal powder or metal fiber, which contain copper, nickel, aluminum, silver, or the like; conductive polymers such as polyphenylene derivatives, or a mixture thereof.

Al may be used as the substrate, but the present disclosure is not limited thereto.

### Negative Electrode Active Material

The negative electrode active material includes a material capable of reversible lithium-ion intercalation/deintercalation, lithium metal, an alloy of lithium metal, a material with which lithium can be doped or which can be dedoped from lithium, or a transition metal oxide.

The material capable of reversible lithium-ion intercalation/deintercalation may include a carbon-based negative electrode active material, such as crystalline carbon, amorphous carbon, or a combination thereof. Examples of the crystalline carbon may include graphite, such as natural graphite or artificial graphite in an amorphous, plate-like, flake-like, spherical, or fiber-like form, and examples of the amorphous carbon may include soft carbon or hard carbon, mesophase pitch carbides, and calcined coke.

The alloy of lithium metal may be an alloy of lithium and a metal selected from Na, K, Rb, Cs, Fr, Be, Mg, Ca, Sr, Si, Sb, Pb, In, Zn, Ba, Ra, Ge, Al, and Sn.

The material with which lithium can be doped or which can be dedoped from lithium may be a Si-based negative electrode active material or a Sn-based negative electrode active material. The Si-based negative electrode active material may be silicon, a silicon-carbon composite, SiOx (0<x<2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO2, a Sn-based alloy, or a combination thereof.

The silicon-carbon composite may be a composite of silicon and amorphous carbon. According to embodiments, the silicon-carbon composite may be in the form of silicon particles and amorphous carbon coated on surfaces of the silicon particles. For example, the silicon-carbon composite may include secondary particles (cores) obtained by assembling primary silicon particles, and amorphous carbon coating layers (shells) located on surfaces of the secondary particles. The amorphous carbon may also be located between the primary silicon particles, for example, so that the primary silicon particles may be coated with the amorphous carbon. The secondary particles may be dispersed and present in an amorphous carbon matrix.

The silicon-carbon composite may further include crystalline carbon. For example, the silicon-carbon composite may include cores including crystalline carbon and silicon particles, and amorphous carbon coating layers located on surfaces of the cores.

The Si-based negative electrode active material or the Sn-based negative electrode active material may be used in combination with the carbon-based negative electrode active material.

### Negative Electrode

The negative electrode of the secondary battery 100 includes a substrate and a negative electrode composite layer located on the substrate. The negative electrode composite layer may include a negative electrode active material and may further include a binder and/or a conductive material.

For example, the negative electrode composite layer may contain the negative electrode active material at 90 to 99 wt%, the binder at 0.5 to 5 wt%, and the conductive material at 0 to 5 wt%.

The binder serves to firmly bind the negative electrode active material particles to each other and also to firmly bind the negative electrode active material to the substrate. The binder may be a non-aqueous binder, an aqueous binder, a dry binder, and a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound capable of imparting viscosity may be further included. The cellulose-based compound may be a mixture of one or more kinds of carboxymethyl cellulose, hydroxypropyl methyl cellulose, methyl cellulose, an alkali metal salt thereof, and the like. The alkali metal may be Na, K, or Li.

The dry binder may be a polymer material capable of being fiberized, such as polytetrafluoroethylene, polyvinylidene fluoride, a polyvinylidene fluoride-hexafluoropropylene copolymer, polyethylene oxide, or a combination thereof.

The conductive material is used to provide conductivity to the electrode, and any material that does not cause a chemical change and is electronically conductive may be used in the battery to be formed. Specific examples of the conductive material include a carbon-based material such as natural graphite, artificial graphite, carbon black, acetylene black, Ketjen black, carbon fiber, carbon nanofiber, and carbon nanotube; a metal-based material including copper, nickel, aluminum, silver, or the like and having the form of metal powder or metal fiber; a conductive polymer such as polyphenylene derivatives; or a mixture thereof.

The negative electrode substrate may be selected from a copper foil, a nickel foil, a stainless steel foil, a titanium foil, a nickel foam, a copper foam, a polymer substrate coated with a conductive metal, and a combination thereof.

### Electrolyte (not illustrated)

The electrolyte for the secondary battery 100 includes a non-aqueous organic solvent and a lithium salt.

The non-aqueous organic solvent serves as a medium through which ions involved in an electrochemical reaction of the battery can move.

The non-aqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like may be used.

As the ester solvent, methyl acetate, ethyl acetate, n-propyl acetate, dimethyl acetate, methylpropionate, ethylpropionate, decanolide, mevalonolactone, valerolactone, caprolactone, or the like may be used.

As the ether solvent, dibutyl ether, tetraglyme, diglyme, dimethoxyethane, 2-methyltetrahydrofuran, 2,5-dimethyltetrahydrofuran, tetrahydrofuran, or the like may be used. Further, as the ketone solvent, cyclohexanone or the like may be used. As the alcohol-based solvent, ethyl alcohol, isopropyl alcohol, or the like may be used. As the aprotic solvent, nitriles such as R-CN (R is a linear, branched, or cyclic hydrocarbon group having 2 to 20 carbon atoms, and may include a double bond, an aromatic ring, or an ether group); amides such as dimethylformamide; dioxolanes such as 1,3-dioxolane and 1,4-dioxolane; sulfolanes; or the like may be used.

The non-aqueous organic solvent may be used alone or in mixture of two or more types.

Further, when the carbonate-based solvent is used, a cyclic carbonate and a chain carbonate may be mixed and used, and the cyclic carbonate and the chain carbonate may be mixed in a volume ratio of 1:1 to 1:9.

The lithium salt is a substance that is dissolved in an organic solvent and acts as a source of lithium ions in the secondary battery, thereby enabling a basic operation of the secondary battery and promoting the movement of the lithium ions between the positive electrode and the negative electrode. Representative examples of the lithium salt may include one or more selected from LiPF6, LiBF4, LiSbF6, LiAsF6, LiClO4, LiAlO2, LiAlCl4, LiPO2F2, LiCl, LiI, LiN(SO3C2F5)2, Li(FSO2)2N (lithium bis(fluorosulfonyl)imide LiFSI), LiC4F9SO3, LiN(CxF2x+1SO2)(CyF2y+1SO2)(x and y are integers from 1 to 20), lithium trifluoromethane sulfonate, lithium tetrafluoroethane sulfonate, lithium difluorobis(oxalato)phosphate (LiDFOB), and lithium bis(oxalato)borate LiBOB).

### Separator 30

Depending on a type of secondary battery 100, the separator 30 may be present between the first electrode 10 and the second electrode 20. It is obvious that the separator 30 may be made of polyethylene, polypropylene, polyvinylidene fluoride, or a multilayer film including two or more layers of these materials, and may be a mixed multilayer film such as a two-layer separator including polyethylene and polypropylene, a three-layer separator including polyethylene, polypropylene, and polyethylene, or a three-layer separator including polypropylene, polyethylene, and polypropylene.

The separator 30 may include a porous substrate, and a coating layer including an organic material, an inorganic material, or a combination thereof located on one or both sides of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more of these materials.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed and present in one coating layer or may be present in a form in which a coating layer including the organic material and a coating layer including the inorganic material are stacked.

The electrode assembly 40 may be accommodated inside the case 50 and impregnated with an electrolyte (not shown).

The secondary battery 100 may be classified into, for example, cylindrical, prismatic, pouch, and coin types depending on the shape of the case 50.

For example, the secondary battery 100 illustrated in FIG. 1 is a cylindrical secondary battery. As illustrated in FIG. 1, the secondary battery 100 may include a cap assembly 60 that seals the case 50. The cap assembly 60 is coupled to an opening of the case 50 to seal the electrode assembly 40 inside the case 50. The cap assembly 60 may block an electrical connection between the secondary battery 100 and an external device when an internal pressure of the case 50 increases to be a set level or higher.

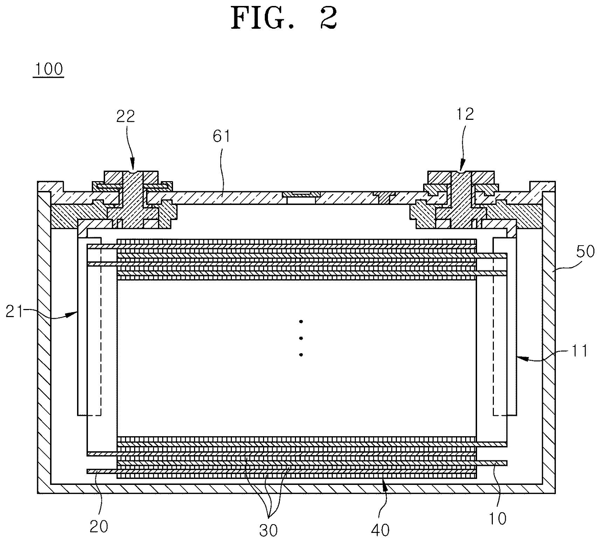

For example, the secondary battery 100 illustrated in FIG. 2 is a prismatic secondary battery. As illustrated in FIG. 2, the secondary battery 100 may include a first lead tab 11 connected to the first electrode 10 and/or a first terminal 12 connected to the first lead tab 11 and disposed outside the case 50 to electrically connect the first electrode 10 to an external device. And/or, as illustrated in FIG. 2, the secondary battery 100 may include a second lead tab 21 connected to the second electrode 20 and/or a second terminal 22 connected to the second lead tab 21 and disposed outside the case 50 to electrically connect the second electrode 20 to an external device. Further, the secondary battery 100 may further include a cap plate 61 that seals the opening of the case 50. The first terminal 12 and/or the second terminal 22 may be exposed to the outside of the cap plate 61.

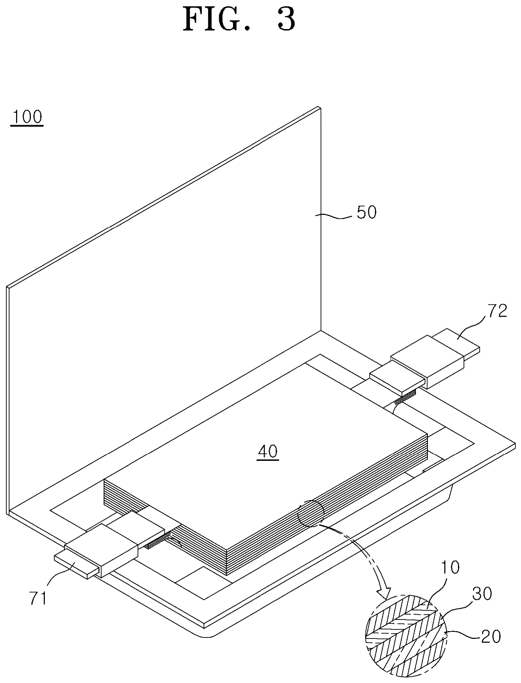

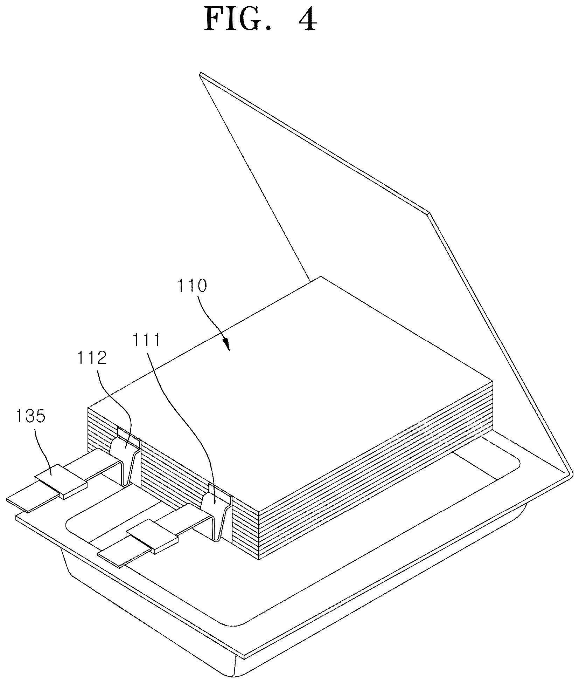

For example, the secondary battery 100 illustrated in FIGS. 3 and 4 is a pouch-type secondary battery. The secondary battery 100 may include electrode tabs 71, 72 connected to the electrode assembly 40 to allow current to flow to an external device. For example, the electrode tabs 71, 72 may include a first tab 71 electrically connected to the first electrode 10 and/or a second tab 72 electrically connected to the second electrode 20.

Meanwhile, the secondary battery 100 may generate heat due to self-heating while repeating charging and discharging or may generate heat due to an external impact. The secondary battery 100 may undergo thermal runaway with a rapid increase in temperature. In general, the secondary battery 100 includes a vent (for example, referred to as a vent, vent plate, or vent part) that can discharge an internal gas and debris in a thermal runaway situation. When the secondary battery 100 undergoes thermal runaway, the vent is ruptured and provides a path enabling the gas and debris to be discharged to the outside.

However, when the secondary battery 100 is designed in a state in which the rupture pressure of the secondary battery 100 is appropriately measured, the case 50, the cap assembly 60, the cap plate 61, and the like rather than the vent may rupture when the secondary battery 100 undergoes thermal runaway. In this case, the gas and debris may be discharged in an unintended direction, which may result in greater human or material damage.

Therefore, it is required to accurately measure the rupture pressure of the secondary battery 100 in consideration of a thermal runaway situation, and to design the secondary battery 100 based on this rupture pressure.

Hereinafter, a rupture pressure measurement apparatus 200 capable of accurately measuring the rupture pressure of the secondary battery 100 will be described in detail.

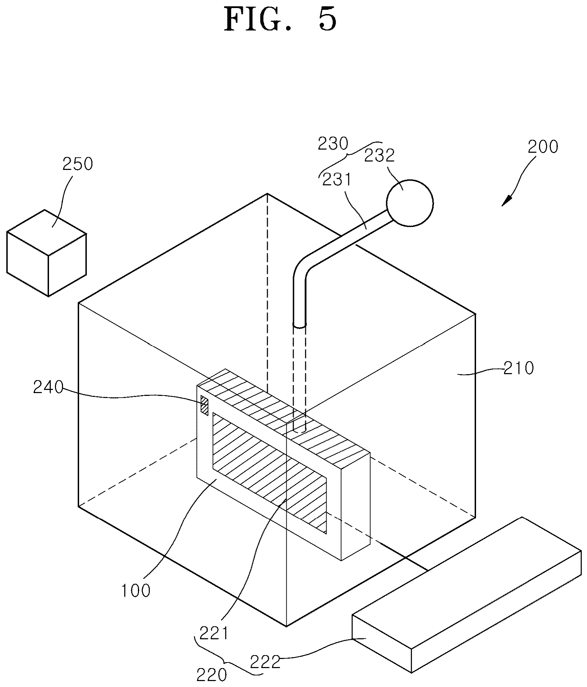

FIG. 5 is a schematic diagram of a rupture pressure measurement apparatus according to embodiments of the present disclosure.

The rupture pressure measurement apparatus 200 according to embodiments of the present disclosure can measure the rupture pressure of a secondary battery 100 (including, for example, the secondary battery 100 described with reference to FIGS. 1 to 4).

For example, the rupture pressure measurement apparatus 200 can measure a rupture pressure of components included in the secondary battery 100. For example, the rupture pressure measurement apparatus 200 can measure a rupture pressure of the case 50 of the secondary battery 100. For example, the rupture pressure measurement apparatus 200 can measure a rupture pressure of the cap assembly 60 of the secondary battery 100. For example, the rupture pressure measurement apparatus 200 can measure a rupture pressure of the cap plate 61 of the secondary battery 100.

The rupture pressure indicates a pressure at which the secondary battery 100 is ruptured. For example, the rupture pressure indicates a pressure at which at least one of the case 50, the cap assembly 60, and the cap plate 61 begins to be ruptured.

In order to measure the rupture pressure of the secondary battery 100, the rupture pressure measurement apparatus 200 includes a chamber 210, a heating unit 220, a pressing unit 230, and a main sensor 240. The rupture pressure measurement apparatus 200 may further include a sub-sensor 250. However, components included in the rupture pressure measurement apparatus 200 are not limited thereto, and the rupture pressure measurement apparatus 200 may include only some of the components illustrated in FIG. 5 and/or may further include components that are not illustrated in FIG. 5.

The chamber 210 according to embodiments of the present disclosure is provided with the secondary battery 100 therein.

The chamber 210 may be hollow and sealed. For example, as illustrated in FIG. 5, the chamber 210 may be formed in an approximately hollow hexahedral shape. However, the shape of the chamber 210 is not limited thereto and may be any hollow shape in which the secondary battery 100 can be placed.

The chamber 210 may include an insulating material on at least a portion of an inner wall thereof. For example, the insulation may include at least one selected from the group consisting of aerogel, mica, vermiculite, talc, silica, quartz, rock wool, alumina, feldspar, kaolin, diatomaceous earth, and perlite. This makes it possible for the chamber 210 to prevent the inside thereof from being affected by external environmental change.

Alternatively, the chamber 210 may include a sound-absorbing material on at least a portion of the inner wall. Examples of the sound-absorbing material may include a porous sound-absorbing material, a resonant sound-absorbing material, and a plate-vibration type sound-absorbing material. Examples of the porous sound-absorbing material may include glass wool, rock wool, and cork. Examples of the resonant sound-absorbing material may include aluminum, a synthetic resin, a gypsum board, and soft fiber. Examples of the plate-vibration type sound-absorbing material may include a gypsum board and a synthetic resin. This makes it possible for the chamber 210 to partially prevent loud noise from leaking out even when such noise occurs inside.

The secondary battery 100 may be provided inside the chamber 210. For example, the secondary battery 100 may be provided on a bottom surface of the chamber 210 inside the chamber 210, as illustrated in FIG. 5. Alternatively, for example, the secondary battery 100 may be provided spaced apart from the bottom surface of the chamber 210 and fixed to a side or upper surface of the chamber 210, unlike the illustration in FIG. 5. Alternatively, the chamber 210 may further include a stand on which the secondary battery 100 may be placed, and the secondary battery 100 may be provided on the stand. In this case, the secondary battery 100 may be located to be spaced apart from all the inner surfaces of the chamber 210. Accordingly, the secondary battery 100 may not be affected by, for example, a temperature of the chamber 210.

The chamber 210 may include an entrance (not shown) through which the secondary battery 100 may enter and exit. The entrance may be formed in a hinged or sliding form with respect to the chamber 210. Alternatively, the entrance may be detachable from the chamber 210 and may be formed by bonding, coupling, assembling, or the like in the chamber 210.

If necessary, at least one of the heating unit 220, the pressing unit 230, the main sensor 240, and the sub-sensor 250 may be provided inside the chamber 210. Alternatively, a part of at least one of the heating unit 220, the pressing unit 230, the main sensor 240, and the sub-sensor 250 may be provided inside the chamber 210.

In this case, the secondary battery 100 placed inside the chamber 210 may be the secondary battery 100 in the form of a finished product. Alternatively, the secondary battery 100 placed inside the chamber 210 may include components of the secondary battery 100 as components constituting the secondary battery 100. The parts of the secondary battery 100 may include the case 50 of the secondary battery, the cap assembly 60 of the secondary battery, the cap plate 61 of the secondary battery, and the like. The secondary battery 100 that is a target of the measurement of the rupture pressure, which will be described herein, may include the finished product and/or components of the secondary battery 100.

The heating unit 220 according to embodiments of the present disclosure heats the secondary battery 100.

The heating unit 220 may apply heat to the secondary battery 100. For example, the heating unit 220 may provide an environment in which an internal temperature of the secondary battery 100 is elevated and causes thermal runaway. Alternatively, for example, the heating unit 220 may provide an environment in which an external temperature of the secondary battery 100 is elevated and the secondary battery 100 is situated at a high temperature.

When the heating unit 220 heats the secondary battery 100 in a state in which the heating unit 220 is spaced apart from the secondary battery 100, a space inside the chamber 210 may be heated together. In this case, the inside of the chamber 210 may be unexpectedly changed to a high temperature and pressure environment due to a high temperature. Further, as the entire inside of the chamber 210 becomes at a high temperature, the pressure that the pressing unit 230 should apply to the secondary battery 100 may be increased. In this case, energy inefficiency in which a larger amount of power is unnecessarily consumed by the rupture pressure measurement apparatus 200 may occur.

To solve this problem, the heating unit 220 may heat the secondary battery 100 in contact with the secondary battery 100. That is, the heating unit 220 may come into contact with an outer surface of the secondary battery 100 and directly transfer heat to the secondary battery 100.

Further, to solve this problem, the heating unit 220 may include an electric heater. This is because an environment inside the chamber 210 may also change when the heating unit 220 applies heat to the secondary battery 100 using methods other than electricity.

The heating unit 220 may include a heater 221. The heater 221 may come into contact with the outer surface of the secondary battery 100 to heat the secondary battery 100.

The heating unit 220 may include a power supply unit 222. The power supply unit 222 may be electrically connected to the heater 221. The power supply unit 222 may supply power (voltage) to the heater 221. The power supply unit 222 may control the heater 221 so that the heater 221 heats the secondary battery isothermally.

The pressing unit 230 according to embodiments of the present disclosure presses the secondary battery 100 until the secondary battery 100 is ruptured.

The pressing unit 230 may press the secondary battery 100. The pressing unit 230 may apply force to the secondary battery 100. The pressing unit 230 may apply the force from the inside of the secondary battery 100 toward the outside of the secondary battery 100. Alternatively, the pressing unit 230 may apply the force from the outside of the secondary battery 100 toward the inside of the secondary battery 100.

The pressing unit 230 may press the secondary battery 100 using gas. The pressing unit 230 injects gas into the inside of the secondary battery 100 to apply the force from the inside of the secondary battery 100 toward the outside of the secondary battery 100. Alternatively, the pressing unit 230 may inject the gas into the inside of the chamber 210 to apply the force from the outside of the secondary battery 100 toward the inside of the secondary battery 100. For example, the gas may include an inert gas. For example, the inert gas may include nitrogen.

Alternatively, the pressing unit 230 may press the secondary battery 100 using a liquid. The pressing unit 230 may inject the liquid into the inside of the secondary battery 100 to apply the force from the inside of the secondary battery 100 toward the outside of the secondary battery 100. Alternatively, the pressing unit 230 may inject the liquid into the inside of the chamber 210 to apply the force from the outside of the secondary battery 100 toward the inside of the secondary battery 100. For example, the liquid may include water, oil, or the like.

Hereinafter, a case in which the pressing unit 230 presses the secondary battery 100 through gas will be described by way of example, but this is only an example and embodiments of the present disclosure are not limited thereto.

Further, a case in which the pressing unit 230 presses the secondary battery 100 from the inside toward the outside will be described by way of example, but this is only an example and embodiments of the present disclosure are not limited thereto.

The pressing unit 230 may include a pipe 231. Further, the pressing unit 230 may include a gas injection unit 232.

The pipe 231 is connected to the case 50 of the secondary battery. One side of the pipe 231 may be in contact with the case 50 or may be located inside the case 50. The other side of the pipe 231 may be in contact with the gas injection unit 232 or may be located inside the gas injection unit 232. The pipe 231 may serve as a passage through which gas may move from the gas injection unit 232 toward the case 50.

The gas injection unit 232 may serve as a tank that stores gas. Alternatively, the gas injection unit 232 may transport the gas from the tank in which the gas is stored. The gas injection unit 232 may inject the gas into the secondary battery 100 through the pipe 231. For example, when the gas is injected into the case 50 of the secondary battery, the case 50 may be pressed from the inside to the outside by the gas, and the case 50 may be ruptured at a predetermined pressure or higher.

According to embodiments of the present disclosure, the main sensor 240 measures the rupture pressure of the secondary battery 100 when the secondary battery 100 is ruptured.

The main sensor 240 may measure the pressure applied to the secondary battery 100. The main sensor 240 may measure the rupture pressure, which is a pressure at which the secondary battery 100 is ruptured when the secondary battery 100 is ruptured.

As illustrated in FIG. 5, the main sensor 240 may be provided outside the secondary battery 100 in contact with the secondary battery 100. However, a location of the main sensor 240 is not limited thereto, and the main sensor 240 may be located anywhere as long as the main sensor 240 may measure the rupture pressure of the secondary battery 100. For example, the main sensor 240 may be provided inside the case 50 of the secondary battery. For example, the main sensor 240 may be located on the pressing unit 230. Alternatively, for example, the main sensor 240 may be located apart from the secondary battery 100 and/or on the inner wall of the chamber 210. Alternatively, for example, the main sensor 240 may be located outside the chamber 210.

For example, the main sensor 240 may include a mechanical pressure sensor, an electronic pressure sensor, a semiconductor pressure sensor, or the like. Examples of the mechanical pressure sensor may include a liquid column manometer, an elastic pressure gauge, a standard pressure gauge, and a vacuum gauge. Examples of the electronic pressure sensor may include piezoresistive, piezoelectric, capacitive, and inductive sensors.

The sub-sensor 250 according to embodiments of the present disclosure may detect a ruptured area in the secondary battery 100 when the secondary battery 100 is ruptured.

The sub-sensor 250 may detect a location of the ruptured area of the secondary battery 100 when the secondary battery 100 is ruptured. The sub-sensor 250 may detect which of the components of the secondary battery is ruptured. For example, the sub-sensor 250 may detect which of the case 50, the cap assembly 60, and the cap plate 61 of the secondary battery is ruptured. Further/or, the sub-sensor 250 may detect where rupture has occurred in each of the components of the secondary battery. For example, the sub-sensor 250 may detect which of a side, bottom, front, and back of the case 50 of the secondary battery is ruptured. For example, the sub-sensor 250 may detect where rupture has occurred in a cap up, cap down, insulator, and vent plate of the cap assembly 60 of the secondary battery.

For example, the sub-sensor 250 may include, but is not limited to, an image sensor, an infrared sensor, an ultrasonic sensor, or the like.

With this configuration, the rupture pressure measurement apparatus 200 may provide a high temperature and high pressure environment for the secondary battery 100. The rupture pressure measurement apparatus 200 may provide an environment similar to an actual environment to determine under what conditions the secondary battery 100 is ruptured or becomes vulnerable in an actual thermal runaway or ignition situation. The rupture pressure measurement apparatus 200 may measure the rupture pressure of the secondary battery 100 in the actual situation.

Hereinafter, the components of the rupture pressure measurement apparatus 200 will be described in detail.

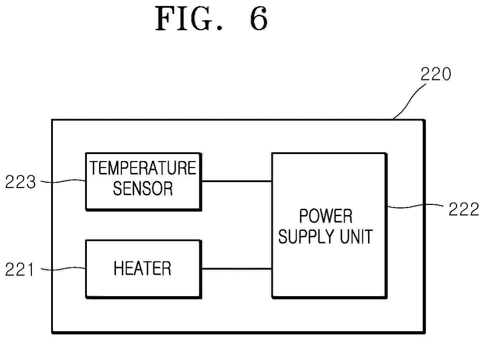

FIG. 6 is a block diagram schematically illustrating components of a heating unit according to embodiments of the present disclosure.

The rupture pressure measurement apparatus 200 according to embodiments of the present disclosure (including, for example, the rupture pressure measurement apparatus 200 described with reference to FIG. 5) includes the heating unit 220.

The heating unit 220 may apply heat to the secondary battery 100. The heating unit 220 may come into contact with the secondary battery 100 to heat the secondary battery 100.

The heating unit 220 may include the heater 221. The heater 221 may include an electric heater. The heater 221 may include a heating wire therein. The heater 221 may convert the voltage supplied from the power supply unit 222 into heat energy. The heater 221 may transfer heat to the secondary battery 100 through the heating wire.

The heater 221 may come into contact with the secondary battery 100 and heat the secondary battery 100. The heater 221 may be provided on an outer surface of the case 50 of the secondary battery. However, the heater 221 may be provided on an inner surface of the case 50 of the secondary battery. Alternatively, the heater 221 may be provided on an inner surface or outer surface of the cap assembly 60 of the secondary battery. Alternatively, the heater 221 may be provided on an inner surface or outer surface of the cap plate 61 of the secondary battery.

For example, the heater 221 may have the form of a thin plate. Alternatively, for example, the heater 221 may have the form of a pad. However, the form of the heater 221 is not limited thereto, and the heater 221 may have any form that is easy to fix to the secondary battery 100.

The heating unit 220 may include the power supply unit 222. The power supply unit 222 may supply power (voltage) to the heater 221. The power supply unit 222 may supply the voltage so that the heater 221 generates heat.

The power supply unit 222 may control a magnitude of the voltage that is supplied to the heater 221. Thus, the power supply unit 222 may control the heater 221 so that the heater 221 heats the secondary battery isothermally.

For example, the power supply unit 222 may cause the heater 221 to heat the secondary battery 100 at a rate of 0.1 °C/min or more and 3 °C/min or less. Alternatively, for example, the power supply unit 222 may cause the heater 221 to heat the secondary battery 100 at a rate of 0.5 °C/min or more and 3 °C/min or less. Alternatively, for example, the power supply unit 222 may cause the heater 221 to heat the secondary battery 100 at a rate of 0.5 °C/min or more and 2.5 °C/min or less. Alternatively, for example, the power supply unit 222 may cause the heater 221 to heat the secondary battery 100 at a rate of 0.5 °C/min or more and 2 °C/min or less. Alternatively, for example, the power supply unit 222 may cause the heater 221 to heat the secondary battery 100 at a rate of 1 °C/min or more and 2 °C/min or less. Alternatively, for example, the power supply unit 222 may cause the heater 221 to heat the secondary battery 100 at a rate of about 2 °C/min.

The heating unit 220 may include a temperature sensor 223. The temperature sensor 223 may measure the temperature of the secondary battery 100. For example, the temperature sensor 223 may measure the temperature of the secondary battery 100 in real time or at predetermined time intervals. For example, the determined time interval may be one second to two hours.

The temperature sensor 223 may be located on the heater 221. Alternatively, the temperature sensor 223 may be located apart from the heater 221 and located on the secondary battery 100. Alternatively, the temperature sensor 223 may be located apart from the secondary battery 100 and the heater 221.

For example, the temperature sensor 223 may include a contact temperature sensor or a non-contact temperature sensor. For example, the temperature sensor 223 may include a thermocouple, an RTD, a thermistor, a temperature label, an infrared temperature sensor, or the like.

The power supply unit 222 may control the magnitude of the voltage that is supplied to the heater 221 based on the temperature of the secondary battery 100 measured by the temperature sensor 223. Hereinafter, a process in which the power supply unit 222 controls the magnitude of the voltage will be described in greater detail.

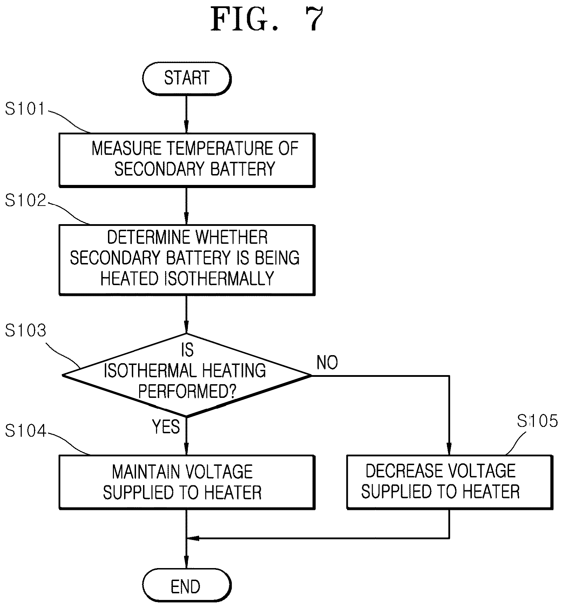

FIG. 7 is a flowchart showing driving of the heating unit according to embodiments of the present disclosure.

The rupture pressure measurement apparatus 200 according to embodiments of the present disclosure (including, for example, the rupture pressure measurement apparatus 200 described with reference to FIGS. 5 to 6) includes the heating unit 220. The heating unit 220 may include the heater 221, the power supply unit 222, and/or the temperature sensor 223.

The temperature sensor 223 may measure the temperature of the secondary battery 100 (S101). The temperature sensor 223 may measure the temperature of the secondary battery 100 in real time. Alternatively, the temperature sensor 223 may measure the temperature of the secondary battery 100 at predetermined time intervals. For example, the determined time interval may range from one second to two hours (including, for example, two seconds, three seconds, four seconds, ..., 60 seconds, one minute, two minutes, ..., 60 minutes, one hour, or the like).

The temperature sensor 223 may measure temperatures of at least two points in the secondary battery 100. Alternatively, the temperature sensor 223 may measure a temperature of an entire area of the secondary battery 100. For example, the temperature sensor 223 may include two or more sensors and may be provided at two or more points spaced apart from each other in the secondary battery 100. In this case, each sensor may measure the temperature at each point. Alternatively, for example, the temperature sensor 223 may acquire a thermal image of the entire area of the secondary battery 100 through a thermal imaging camera or the like. The temperature sensor 223 may measure a temperature of the entire area of the secondary battery 100 and/or measure a relative temperature in the entire area of the secondary battery 100.

The power supply unit 222 may determine whether the secondary battery 100 is being heated isothermally (S102).

In this case, whether the secondary battery 100 is being heated isothermally indicates whether the secondary battery 100 is being heated at the same temperature. That is, when a temperature of one area of the secondary battery 100 is the same as that of another area of the secondary battery in a state in which the secondary battery 100 is heated, the secondary battery 100 may be considered to be isothermally heated.

The power supply unit 222 may determine whether the secondary battery 100 is being heated isothermally in the entire area based on the temperature measured by the temperature sensor 223. For example, the power supply unit 222 determines whether temperatures measured by two or more temperature sensors are the same. Alternatively, for example, the power supply unit 222 determines whether temperatures at points in the entire area of the secondary battery 100 are the same from a thermal image acquired by the temperature sensor 223. In this case, a range of the same temperature includes an error of ±5%.

When the power supply unit 222 determines that the secondary battery 100 is being heated isothermally (S103), the power supply unit 222 may maintain the voltage supplied to the heater 221 (S104).

The power supply unit 222 may supply an arbitrary voltage to the heater 221. The heater 221 may convert electric energy from the arbitrary voltage into thermal energy to heat the secondary battery 100. In this case, when the power supply unit 222 determines that the secondary battery 100 is isothermally heated, the power supply unit 222 may continue to supply the arbitrary voltage to the heater 221.

When the power supply unit 222 determines that the secondary battery 100 is not isothermally heated (S103), the power supply unit 222 may decrease the voltage that is supplied to the heater 221 (S105).

The power supply unit 222 may supply the arbitrary voltage to the heater 221. The heater 221 may convert electric energy from the arbitrary voltage into thermal energy to heat the secondary battery 100. In this case, when the power supply unit 222 determines that the secondary battery 100 is not isothermally heated, the power supply unit 222 may supply a voltage lower than the arbitrary voltage to the heater 221.

In this case, the magnitude of the voltage that is decreased may be a preset magnitude.

Thus, the heating unit 220 may uniformly heat the secondary battery 100. This makes it possible for the rupture pressure measurement apparatus 200 to more accurately measure the rupture pressure of the secondary battery 100. For example, the rupture pressure measurement apparatus 200 may measure the rupture pressure of the secondary battery 100 in an environment similar to the actual thermal runaway or ignition situation by preventing the rupture pressure from being measured in a biased manner due to local heating of the secondary battery 100.

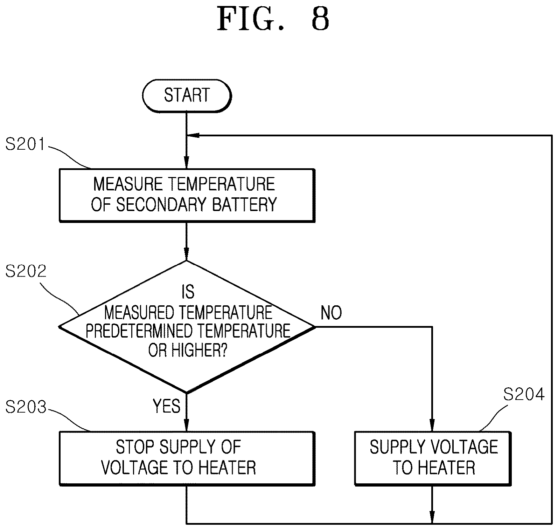

FIG. 8 is a flowchart showing the operation of the heating unit according to embodiments of the present disclosure.

The rupture pressure measurement apparatus 200 according to embodiments of the present disclosure (including, for example, the rupture pressure measurement apparatus 200 described with reference to FIGS. 5 to 7) includes the heating unit 220. The heating unit 220 may include the heater 221, the power supply unit 222, and/or the temperature sensor 223.

The temperature sensor 223 may measure the temperature of the secondary battery 100 (S201). The description of operation S201 is the same as or similar to the description of operation S101 described with reference to FIG. 7.

The power supply unit 222 may determine whether the measured temperature is a predetermined temperature or higher (S202).

For example, the predetermined temperature may be 160 °C or higher. Alternatively, for example, the predetermined temperature may be 180 °C or higher. Alternatively, for example, the predetermined temperature may be 200 °C or higher. Alternatively, for example, the predetermined temperature may be 220 °C or higher. Alternatively, for example, the predetermined temperature may be 240 °C or higher. Alternatively, for example, the predetermined temperature may be 260 °C or higher. Alternatively, for example, the predetermined temperature may be 280 °C or higher. Alternatively, for example, the predetermined temperature may be 300 °C or higher. Alternatively, for example, the predetermined temperature may be 400 °C or higher. Alternatively, for example, the predetermined temperature may be 500 °C or higher. Alternatively, for example, the predetermined temperature may be 600 °C or higher. Alternatively, for example, the predetermined temperature may be 700 °C or higher.

When the predetermined temperature is lower than 160 °C, the rupture pressure of the secondary battery 100 may be measured without consideration of the thermal runaway of the secondary battery 100. Therefore, it is preferable that the predetermined temperature be set to be 160 °C or higher. The predetermined temperature may be set in consideration of, for example, an environment in which the secondary battery 100 is situated, a size of the secondary battery 100, a capacity of the secondary battery 100, materials (negative electrode material, positive electrode material, separator, and the like) included in the secondary battery 100 in the temperature 160 °C or higher.

When the power supply unit 222 determines that the measured temperature is the predetermined temperature or higher, the power supply unit 222 may stop the supply of the voltage to the heater 221 (S203).

Accordingly, the rupture pressure measurement apparatus 200 may be situated in an environment similar to that in which the secondary battery 100 actually runs away. Further, the rupture pressure measurement apparatus 200 can prevent the rupture pressure of the secondary battery 100 from being measured inaccurately due to continuous heating of the secondary battery 100. Further, the rupture pressure measurement apparatus 200 can prevent energy generated by continuously heating the secondary battery 100 from being used inefficiently.

Meanwhile, the power supply unit 222 may resume the supply of the voltage to the heater 221 when the temperature of the secondary battery 100 measured again after the supply of the voltage is stopped is lower than the predetermined temperature.

When the power supply unit 222 determines that the measured temperature is lower than the predetermined temperature, the power supply unit 222 may continue to supply the voltage to the heater 221 (S204).

Accordingly, the rupture pressure measurement apparatus 200 may cause the secondary battery 100 to be situated in an environment similar to that in which the secondary battery 100 actually undergoes thermal runaway. On the other hand, the power supply unit 222 may stop the supply of the voltage to the heater 221 when the temperature of the secondary battery 100 measured again after the supply of the voltage is continued is the predetermined temperature or higher.

Thus, the rupture pressure measurement apparatus 200 may uniformly heat the secondary battery 100 to the predetermined temperature. Accordingly, the rupture pressure measurement apparatus 200 can measure the accurate rupture pressure of the secondary battery 100 in the thermal runaway environment.

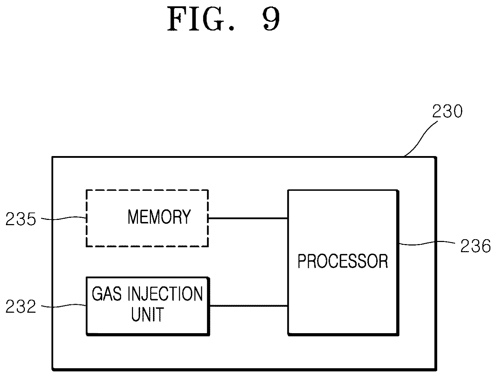

FIG. 9 is a block diagram schematically illustrating components of the pressing unit according to embodiments of the present disclosure.

The rupture pressure measurement apparatus 200 according to embodiments of the present disclosure (including, for example, the rupture pressure measurement apparatus 200 described with reference to FIGS. 5 to 8) includes the pressing unit 230.

The pressing unit 230 may include the gas injection unit 232.

The gas injection unit 232 may inject the gas into the secondary battery 100 through the pipe 231.

The gas injection unit 232 may serve as a tank that stores gas. Alternatively, the gas injection unit 232 may transport the gas from the tank in which the gas is stored. The gas injection unit 232 may inject the gas into the secondary battery 100 through the pipe 231. For example, when the gas is injected into the case 50 of the secondary battery, the case 50 may be pressed from the inside to the outside by the gas, and the case 50 may be ruptured at a predetermined pressure or higher.

The pressing unit 230 may include a processor 236. The processor 236 may simulate the amount of gas generated in the secondary battery 100 in a preset environment. The processor 236 may set the amount of gas injected into the secondary battery 100 based on the simulation. For example, the processor 236 may perform the simulation with the secondary battery 100 situated at a temperature at which the secondary battery 100 explodes. In the simulation, the processor 236 extracts the amount of gas generated inside the secondary battery 100 when the secondary battery 100 explodes. The processor 236 may cause the gas injection unit 232 to inject gas corresponding to the extracted amount of gas into the secondary battery 100.

And/or, the pressing unit 230 may further include a memory 235. The memory 235 may store data regarding the amount of gas. The data regarding the amount of gas may include data in which the amount of gas of the secondary battery 100 is set according to a specification of the secondary battery 100. The data regarding the amount of gas may include data in which the amount of gas generated in the secondary battery 100 is set according to the temperature of the secondary battery 100. The processor 236 may set the amount of gas that is injected into the secondary battery 100 based on the data stored in the memory 235.

The pressing unit 230 may inject gas into the secondary battery 100 until the secondary battery 100 is ruptured. For example, the pressing unit 230 may press the secondary battery 100 until the secondary battery 100 is ruptured when the secondary battery 100 is uniformly heated at a predetermined temperature or higher by the heating unit 220.

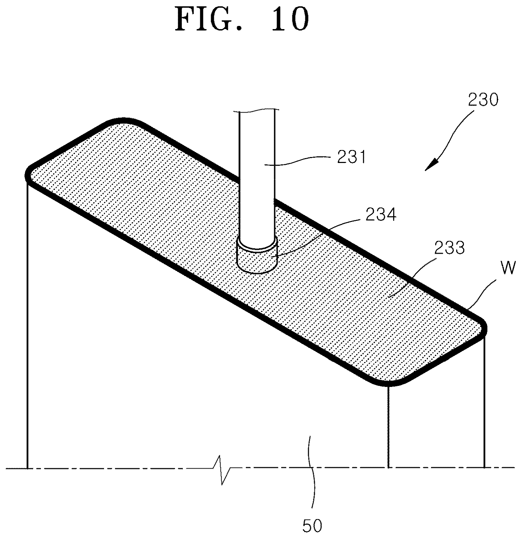

FIG. 10 is a diagram schematically illustrating an example in which the pressing unit presses the case of the secondary battery according to embodiments of the present disclosure.

The rupture pressure measurement apparatus 200 according to embodiments of the present disclosure (including, for example, the rupture pressure measurement apparatus 200 described with reference to FIGS. 5 to 9) includes the pressing unit 230. The pressing unit 230 may include the gas injection unit 232. The pressing unit 230 may further include the pipe 231 that connects the gas injection unit 232 to the secondary battery 100, and the gas injection unit 232 may inject the gas into the secondary battery 100 through the pipe 231.

The pressing unit 230 may include a sealing portion 233.

For example, the rupture pressure measurement apparatus 200 may measure a rupture pressure of the case 50 of the secondary battery. For example, the rupture pressure measurement apparatus 200 may measure the rupture pressure of the case 50 of the secondary battery with one side open. The rupture pressure measurement apparatus 200 may include the sealing portion 233 to measure the rupture pressure of the case 50 after sealing an open portion, which is an open portion of the case 50.

The sealing portion 233 may seal the secondary battery 100. For example, the sealing portion 233 may be coupled to the open portion of the case 50 of the secondary battery to seal the case 50 of the secondary battery. The shape of the sealing portion 233 may be formed corresponding to the shape of the open portion of the case 50.

The sealing portion 233 may be coupled to the open portion of the case 50 by welding. A welding line W may be formed between the sealing portion 233 and the case 50. Since the sealing portion 233 exists separately, the rupture pressure measurement apparatus 200 can measure the rupture pressure of the case 50 itself.

Although not illustrated in FIG. 10, the sealing portion 233 may provide a passage through which the gas injection unit 232 passes. The passage may have the form of a hole passing through the sealing portion 233. One side of the pipe 231 may be connected to the passage formed in the sealing portion 233.

The gas injection unit 232 may inject the gas into the case 50 sealed by the sealing portion 233 through the pipe 231.

The pressing unit 230 may include a fixing tape 234. The fixing tape 234 may seal a space between the pipe 231 and the sealing portion 233. The fixing tape 234 may wrap around a portion in which the sealing portion 233 and the pipe 231 are connected. Accordingly, the fixing tape 234 can prevent gas from leaking between the sealing portion 233 and the pipe 231.

However, the pressing unit 230 may not include the fixing tape 234, and the pipe 231 and the sealing portion 233 may be connected to each other through coupling, welding, or the like.

Meanwhile, the rupture pressure measurement apparatus 200 may measure the rupture pressure of the secondary battery 100 including the case 50 in which the cap assembly 60 or the cap plate 61 is coupled to the opening, unlike the illustration in FIG. 10.

In this case, the pressing unit 230 may not include a separate sealing portion 233. Further, the pipe 231 may be connected to the inside of the secondary battery 100 by penetrating the case 50, the cap assembly 60, or the cap plate 61. The pressing unit 230 may seal a space between the pipe 231 and the secondary battery 100 using the fixing tape 234.

Meanwhile, the one side of the pipe 231 may be formed in a pointed shape to easily penetrate the case 50, the cap assembly 60, or the cap plate 61. However, the shape of the pipe 231 is not limited thereto.

Accordingly, the rupture pressure measurement apparatus 200 can measure the rupture pressure of the secondary battery 100. Further, the rupture pressure measurement apparatus 200 may measure the rupture pressure between the case 50 and the cap assembly 60 or between the case 50 and the cap plate 61.

The rupture pressure measurement apparatus 200 capable of accurately measuring the rupture pressure of the secondary battery 100 at a high temperature that has simulated the actual situation has been described with reference to FIGS. 5 to 10. Hereinafter, a scheme for designing the secondary battery 100 based on the rupture pressure measured through the rupture pressure measurement apparatus 200 will be described.

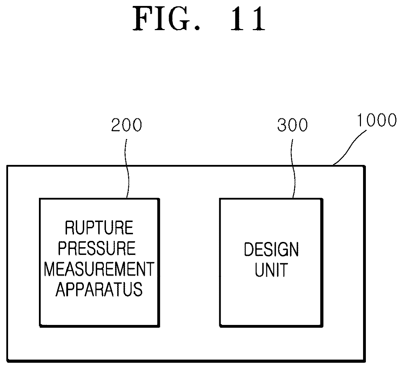

FIG. 11 is a block diagram schematically illustrating components of a secondary battery design system according to embodiments of the present disclosure.

A secondary battery design system 1000 according to embodiments of the present disclosure may design the secondary battery 100.

The secondary battery design system 1000 includes a rupture pressure measurement apparatus 200 (including, for example, the rupture pressure measurement apparatus 200 described with reference to FIGS. 5 to 10) and a design unit 300. The secondary battery design system 1000 may include only some of the components illustrated in FIG. 11, and/or may further include components that are not illustrated in FIG. 11.

The rupture pressure measurement apparatus 200 includes the chamber 210 in which the secondary battery 100 is provided, the heating unit 220 that heats the secondary battery 100, the pressing unit 230 that presses the secondary battery 100 until the secondary battery 100 is ruptured, and the main sensor 240 that measures the rupture pressure of the secondary battery 100 when the secondary battery 100 is ruptured.

The heating unit 220 may further include the heater 221 that comes into contact with the outer surface of the secondary battery 100 to heat the secondary battery 100, and the power supply unit 222 that supplies power to the heater 221 and controls the heater 221 so that the heater 221 heats the secondary battery 100 isothermally.

For example, the power supply unit 222 may cause the heater 221 to heat the secondary battery 100 at a rate of 0.1 °C/min or more and 3 °C/min or less. Alternatively, for example, the power supply unit 222 may cause the heater 221 to heat the secondary battery 100 at a rate of 0.5 °C/min or more and 3 °C/min or less. Alternatively, for example, the power supply unit 222 may cause the heater 221 to heat the secondary battery 100 at a rate of 0.5 °C/min or more and 2.5 °C/min or less. Alternatively, for example, the power supply unit 222 may cause the heater 221 to heat the secondary battery 100 at a rate of 0.5 °C/min or more and 2 °C/min or less. Alternatively, for example, the power supply unit 222 may cause the heater 221 to heat the secondary battery 100 at a rate of 1 °C/min or more and 2 °C/min or less. Alternatively, for example, the power supply unit 222 may cause the heater 221 to heat the secondary battery 100 at a rate of about 2 °C/min.

The heating unit 220 may include the temperature sensor 223. The temperature sensor 223 may measure the temperature of the secondary battery 100.

The power supply unit 222 may determine whether the secondary battery 100 is isothermally heated based on the measured temperature, and reduce a heating rate of the heater 221 when the power supply unit 222 determines that the secondary battery 100 is not isothermally heated.

The pressing unit 230 may further include the gas injection unit 232 that injects the gas into the inside of the secondary battery 100 to press the secondary battery 100.

The pressing unit 230 may further include the processor 236 that simulates the amount of gas generated in the secondary battery in a preset environment and sets the amount of gas that is injected into the secondary battery based on the simulation.

The rupture pressure measurement apparatus 200 may further include the sub-sensor 250 that detects a ruptured area in the secondary battery 100 when the secondary battery 100 is ruptured.

The design unit 300 designs the secondary battery 100 based on the measured rupture pressure.

The design unit 300 may change a design for at least one of a thickness and/or material of a portion corresponding to the ruptured area in the secondary battery 100. For example, the design unit 300 may change the thickness of the portion corresponding to the ruptured area to be larger. For example, the design unit 300 may change the material of the portion corresponding to the ruptured area to a material having higher rigidity. The rigidity considered in this case may include axial rigidity, torsional rigidity, bending rigidity, shear rigidity, or the like.

Through this configuration, the secondary battery design system 1000 can accurately measure the rupture pressure of the secondary battery 100 in a high-temperature environment and accurately design the rigidity of the secondary battery 100 based on the measured rupture pressure. Accordingly, the secondary battery design system 1000 can design the secondary battery 100 with improved safety.

According to the present disclosure, it is possible to measure the rupture pressure of the secondary battery in an environment similar to an actual environment.

According to the present disclosure, it is possible to efficiently improve the strength of the case of the secondary battery.

However, the effects obtainable through the present disclosure are not limited to the herein effects, and other technical effects that are not mentioned will be clearly understood by those skilled in the art from the preceding description of the present disclosure.

Although the present disclosure has been described herein through limited embodiments and drawings, the present disclosure is not limited thereby, and it is obvious that various modifications and variations can be made within the technical idea of the present disclosure and the equivalent scope of the claims described herein by those skilled in the art to which the present disclosure belongs.

## Claims

1. A rupture pressure measurement apparatus comprising:
a chamber providing a space in which a secondary battery can be provided;
a heating unit configured to heat the secondary battery provided in the chamber;
a pressing unit configured to press the secondary battery until the secondary battery is ruptured; and
a main sensor configured to measure a rupture pressure of the secondary battery when the secondary battery is ruptured.

2. The rupture pressure measurement apparatus of claim 1, wherein the heating unit includes a heater configured to come into contact with an outer surface of the secondary battery to heat the secondary battery.

3. The rupture pressure measurement apparatus of claim 2, wherein the heating unit further includes a power supply unit configured to supply power to the heater and control the heater so that the heater heats the secondary battery isothermally.

4. The rupture pressure measurement apparatus of claim 3, wherein the power supply unit causes the heating unit to heat the secondary battery at a rate of 0.1 °C/min or more and 3 °C/min or less.

5. The rupture pressure measurement apparatus of claim 3 or 4, further comprising a temperature sensor configured to measure a temperature of the secondary battery,
wherein the power supply unit determines whether the secondary battery is isothermally heated based on the measured temperature and reduces a heating rate of the heater when it is determined that the secondary battery is not isothermally heated.

6. The rupture pressure measurement apparatus of claim 5, wherein the power supply unit stops the supply of power to the heater when the measured temperature is a predetermined temperature or higher.

7. The rupture pressure measurement apparatus of any preceding claim, wherein the pressing unit further includes a gas injection unit configured to inject gas into the secondary battery to press the secondary battery.

8. The rupture pressure measurement apparatus of claim 7, wherein the pressing unit further includes a processor configured to simulate an amount of gas generated in the secondary battery in a preset environment and sets an amount of gas injected into the secondary battery based on the simulation.

9. The rupture pressure measurement apparatus of claim 7 or 8, wherein the pressing unit further includes:
a memory configured to store data regarding an amount of gas; and
a processor configured to set an amount of gas injected into the secondary battery based on the data.

10. The rupture pressure measurement apparatus of claim 7, 8 or 9, wherein the pressing unit further includes a sealing portion configured to seal the secondary battery and provide a passage through which the gas injection unit passes.

11. The rupture pressure measurement apparatus of any one of claims 7 to 10, wherein:
the gas injection unit passes through the secondary battery and is fixed to the secondary battery; and
the pressing unit further includes a fixing tape configured to seal a space between the gas injection unit and the secondary battery.

12. The rupture pressure measurement apparatus of any preceding claim, further comprising a sub-sensor configured to detect a ruptured area in the secondary battery when the secondary battery is ruptured.

13. A secondary battery design system comprising:
a rupture pressure measurement apparatus according to any one of claims 1 to 12; and
a design unit configured to design the secondary battery based on the measured rupture pressure.

14. The secondary battery design system of claim 13, wherein the design unit changes a design for at least one of a thickness and material of a portion corresponding to the ruptured area in the secondary battery.
